# EUROPEAN PATENT APPLICATION

(11) **EP 3 051 672 A1**
(43) Date of publication of application: **03.08.2016**
(21) Application number: 13894252.9
(22) Date of filing: 24.09.2013
(51) Int. Cl.: H02K 11/00

(54) **BRUSHLESS WIPER MOTOR**

(71) Applicant: Mitsuba Corporation, Kiryu-shi, Gunma 376-8555 (JP)
(72) Inventor: KIMURA, Masaaki, Kiryu-shi Gunma 376-8555 (JP); TANAKA, Hiroto, Kiryu-shi Gunma 376-8555 (JP); IWAZAKI, Tamotsu, Kiryu-shi Gunma 376-8555 (JP)
(74) Representative: de Kernier, Gabriel
(86) International application number: PCT/JP2013/075712
(87) International publication number: WO 2015/045003

(57) **Abstract**

A magnet 34 for the rotating shaft (first magnet, second magnet) is installed on the extended portion of the rotating shaft 33b in the gear housing 41, and Hall ICs 65a to 65c for the rotating shaft (first sensor, second senor) are formed on the control board 60 inside the gear housing 41 so as to face the magnet 34 for the rotating shaft. The Hall ICs 65a to 65c for the rotating shaft are adapted to detect the rotation position of the rotating shaft 33b relative to the stator 32, that is, the rotation position of the rotor 33 relative to the stator 32, and the Hall ICs 65a to 65c for the rotating shaft are adapted to detect the rotation number of the rotating shaft 33b.

## Description

### TECHNICAL FIELD OF THE INVENTION

The present invention relates to a brushless wiper motor for driving a wiper member which wipes a windshield to remove extraneous matters which is in contact with the windshield.

### BACKGROUND OF THE INVENTION

Conventionally, a wiper apparatus for wiping a windshield to remove rain water, dust and the like on the windshield is installed on a vehicle such as automotive vehicle or the like. The wiper apparatus is provided with: a wiper member which performs swinging movement on the windshield; and a wiper motor for swinging the wiper member. When an operator turns on a wiper switch provided in the vehicle room, the wiper motor drives the wiper member, thereby causing the wiper member to carry out reciprocal wiping operations on the windshield to wipe a windshield to remove extraneous matters on the windshield.

As one example of the wiper motor to be used in this wiper apparatus, a technique described in Patent Document 1 has been known. The electric motor (wiper motor) described in Patent Document 1 is provided with a motor unit having an armature shaft (rotating shaft), and a commutator is integrally formed on the armature shaft. A pair of brushes is in sliding contact with the commutator, the wiper motor described in Patent Document 1 is composed of a wiper motor with brushes. The motor unit is connected to a speed reduction mechanism unit, and a speed reducer having a worm and a worm wheel is housed in a gear case (gear housing) of the speed reduction mechanism unit.

Furthermore, a control board is housed in the gear case, and a first magnetic sensor and a second magnetic sensor are installed on the control board. Furthermore, the first magnetic sensor is used for detecting a change in the magnetic pole of a ring-shaped magnet secured to the armature shaft, thereby detecting the rotation number of the armature shaft. On the other hand, the second magnetic sensor is used for detecting a change in the magnetic pole of a sensor magnet secured to a rotation center portion of the worm wheel, thereby detecting the rotation position of the output shaft.

In such a wiper motor with brushes, output limitations, such as reduction in output of the wiper motor or the like, tends to be imposed on the basis of increase in temperature of the brushes, and this causes the operation of the wiper motor to become unstable. Furthermore, since sliding sound of the brushes to the commutator is comparatively great, it is necessary to install a soundproof measure on a high-class vehicle or the like in which a high degree of quietness. In addition, since electronic parts such as capacitor, choke coil or the like for removing brush noise need to be installed in the vicinity of each brush, there is a limitation in downsizing of the wiper motor, this resulting in a reduction in mountability of a small-size vehicle such as light vehicle or the like.

Therefore, in order to solve these problems, a brushless wiper motor which is not provided with brushes has been proposed as a motor to be applied to a vehicle. Patent Document 2 discloses one example of a motor composed without using brushes (brushless motor). The brushless motor disclosed in Patent Document 2 is a so-called inner rotor-type brushless motor, and a stator on which a stator winding wire (coil) is wound is installed on the inner circumference of a housing, with a rotor having a main magnet (permanent magnet) being rotatably installed in the stator. Furthermore, a sub-magnet for use in detecting the rotation position of the rotor relative to the stator is installed on the rotating shaft fixed on the rotation center of the rotor, and the sub-magnet faces each of Hall elements of motor boards secured to an end bracket. Thus, by successively switching a driving current to a stator coil on the basis of an electric signal from each of the Hall elements, the rotor is rotated.

### RELATED ART DOCUMENTS

### PATENT DOCUMENTS

Patent document 1: Japanese Patent Application Laid-Open Publication No. 2009-225520 (FIG. 1)
Patent document 2: Japanese Patent Application Laid-Open Publication No. H06-105521 (FIG. 1)

### SUMMARY OF THE INVENTION

### PROBLEMS TO BE SOLVED BY THE INVENTION

However, in a case where the brushless motor disclosed in Patent Document 2 is simply applied in place of the motor unit (with brushes) disclosed in Patent Document 1, since a thickness dimension (Patent Document 1) on the periphery of the brush unit along the axial direction of the rotating shaft and a thickness dimension (Patent Document 2) on the periphery of the sub-magnet along the axial direction of the rotating shaft are substantially the same thickness dimension, with the result that it is difficult to further reduce the size of the wiper motor. Therefore, in order to further miniaturize the wiper motor, it has been required to basically reconsider the structure of the brushless wiper motor and the structure of the control board housed in a gear housing.

An object of the present invention is to provide a brushless wiper motor in which a sensor for detecting the rotation position of the rotor relative to the stator is installed on a control board which is housed in the gear housing so that the size thereof is improved.

### MEANS FOR SOLVING THE PROBLEMS

According to an aspect of the present invention, there is provided a brushless wiper motor for driving a wiper member which wipes a windshield to remove extraneous matters which is in contact with the windshield, the brushless wiper motor comprising: a stator around which coils are wound; a rotor provided with a permanent magnet and a rotating shaft; an output shaft for externally outputting a rotation of the rotating shaft; a gear housing for rotatably supporting the output shaft; a control board installed in the gear housing; a first magnet integrally formed on an extended portion of the rotating shaft in the gear housing, and used for detecting a rotation position of the rotating shaft relative to the stator; a first sensor installed on the control board so as to face the first magnet, and adapted to generate an electric signal in response to the relative rotation of the first magnet; a second magnet integrally formed on the extended portion of the rotating shaft in the gear housing, and used for detecting a rotation number of the rotating shaft; a second sensor installed on the control board so as to face the second magnet, and adapted to generate an electric signal in response to the relative rotation of the second magnet; a third magnet integrally formed on the extended portion of the rotating shaft in the gear housing and used for detecting the rotation position of the output shaft relative to the gear housing; and a third sensor installed on the control board so as to face the third magnet, and adapted to generate an electric signal in response to the relative rotation of the third magnet.

In the brushless wiper motor according to the present invention, the first magnet and the second magnet are formed of a common magnet and the first sensor and the second sensor are formed of a common sensor.

In the brushless wiper motor according to the present invention, the permanent magnet, first and second magnets are magnetized such that polarities are alternately aligned toward a circumferential direction of the rotating shaft, with the polarity of the permanent magnet and the polarities of the first and second magnets being matched in an axial direction of the rotating shaft.

In the brushless wiper motor according to the present invention, the number of poles of the first and second magnets is equal to an integral multiple of the number of poles of the permanent magnet.

In another aspect of the present invention, there is provided a brushless wiper motor for driving a wiper member for wiping a windshield to remove extraneous matters which is in contact with the windshield, the brushless wiper motor comprising: a stator around which coils are wound; a rotor provided with a permanent magnet and a rotating shaft; an output shaft for externally outputting a rotation of the rotating shaft; a gear housing for rotatably supporting the output shaft; a control board installed in the gear housing; a first magnet integrally formed on an extended portion of the output shaft in the gear housing and used for detecting a rotation position of the rotating shaft relative to the stator; a first sensor which is installed on the control board so as to face the first magnet and adapted to generate an electric signal in response to the relative rotation of the first magnet; a second magnet which is integrally formed on the extended portion of the output shaft in the gear housing and used for detecting a rotation number of the rotating shaft; a second sensor which is installed on the control board so as to face the second magnet and adapted to generate an electric signal in response to the relative rotation of the second magnet; a third magnet which is integrally formed on an extended portion of the rotating shaft in the gear housing and used for detecting the rotation position of the output shaft relative to the gear housing; and a third sensor which is installed on the control board so as to face the third magnet and adapted to generate an electric signal in response to the relative rotation of the third magnet.

### EFFECTS OF THE INVENTION

According to the brushless wiper motor of the present invention, a first magnet is installed on an extended portion in the gear housing of the rotating shaft, and a first sensor is installed on a control board inside the gear housing so as to face the first magnet so that the rotation position of the rotating shaft relative to the stator, that is, the rotation position of the rotor relative to the stator, is detected by the first sensor. Thus, the first sensor for detecting the rotation position of the rotor, the second sensor for detecting the rotation number of the rotating shaft and the third sensor for detecting the rotation position of the output shaft relative to the gear housing can be concentrated and formed on the control board. Therefore, since it is no longer required to install the first sensor close to the rotor of the brushless wiper motor, the dimension along the axial direction of the rotating shaft of the brushless wiper motor can be shortened and further downsized.

According to the brushless wiper motor of the present invention, the first magnet and the second magnet can be formed by a commonly-used magnet and the first sensor and the second sensor can be formed as a commonly-used sensor, and in this case, by cutting the number of the magnets and the number of the sensors, it is possible to achieve a low cost and light-weight of the brushless wiper motor.

According to the brushless wiper motor of the present invention, the permanent magnet, the first and second magnets are respectively magnetized so as to alternately align the polarities toward the circumferential direction of the rotating shaft, and the polarity of the permanent magnet and the polarities of the first and second magnets can be matched toward the axial direction of the rotating shaft; thus, in this case, the detection of the rotation position of the rotor relative to the stator and the rotor control on the basis of this detection can be simplified.

According to the brushless wiper motor of the present invention, the number of poles of the first and second magnets can be set to an integral multiple of the number of poles of the permanent magnet, and in this case, the detection precision of the rotation position of the rotor relative to the stator can be improved so that the control of the rotor can be carried out with higher precision.

According to the brushless wiper motor of the present invention, a first magnet, a second magnet, and a third magnet are formed on the extended portion of the output shaft in the gear housing, and a first sensor, a second sensor and a third sensor can be installed on a control board so as to face these first magnet, second magnet and third magnet.

### BRIEF DESCRIPTION OF THE DRAWINGS

FIG. 1 is a view showing a wiper apparatus mounted on a vehicle, and provided with a wiper motor according to the present invention;
FIG. 2 is an outside view showing the wiper motor of FIG. 1;
FIG. 3 is a bottom view showing the wiper motor with a gear cover being detached from a gear housing;
FIG. 4 is an explanatory view explaining detailed structures of a rotor and a rotating shaft;
FIG. 5A is a cross-sectional view taken along a line A-A of FIG. 4;
FIG. 5B is a cross-sectional view taken along a line B-B of FIG. 4;
FIG. 5C is a cross-sectional view showing a modified example of a magnet for the rotating shaft;
FIG. 6 is a block diagram explaining an electric system of the wiper motor;
FIG. 7 is pulse waveform diagrams showing an output state of an electric signal from each of Hall ICs;
FIG. 8 is a bottom view corresponding to FIG. 3 of the wiper motor according to a second embodiment;
FIG. 9 is a block diagram explaining an electric system of the wiper motor of FIG. 8;
FIG. 10 shows pulse waveform diagrams showing an output state of an electric signal from each of Hall ICs and MR sensors;
FIG. 11 is a bottom view corresponding to FIG. 3 of a wiper motor according to a third embodiment;
FIG. 12 is a block diagram explaining an electric system of the wiper motor of FIG. 11;
FIG. 13 is a view corresponding to FIG. 4 of a wiper motor according to a fourth embodiment;
FIG. 14A is a cross-sectional view taken along a line D-D of FIG. 13;
FIG. 14B is a cross-sectional view taken along a line E-E of FIG. 13; and
FIG. 14C is a cross-sectional view showing a modified example of a magnet for the rotating shaft.

### DETAILED DESCRIPTION OF THE PREFERRED EMBODIMENTS

Hereinafter, the first embodiment of the present invention will be described in detail with reference to the accompanying drawings.

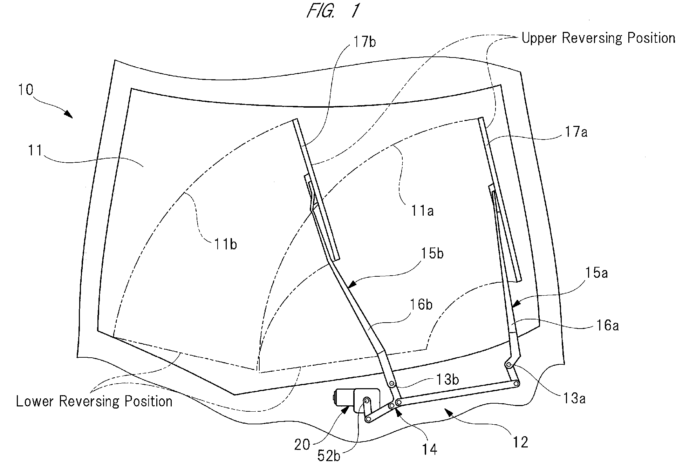

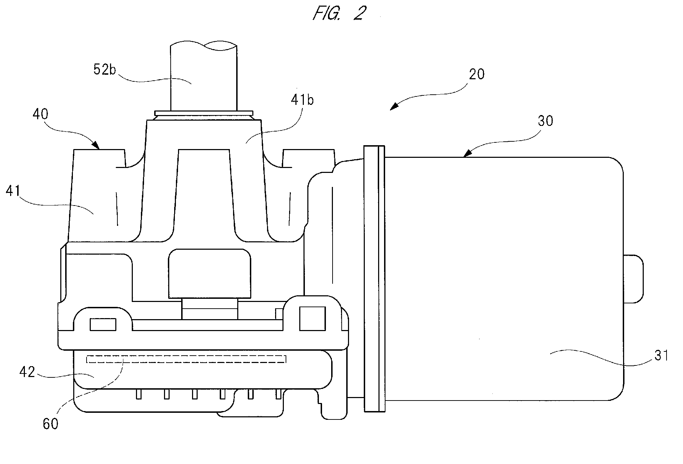

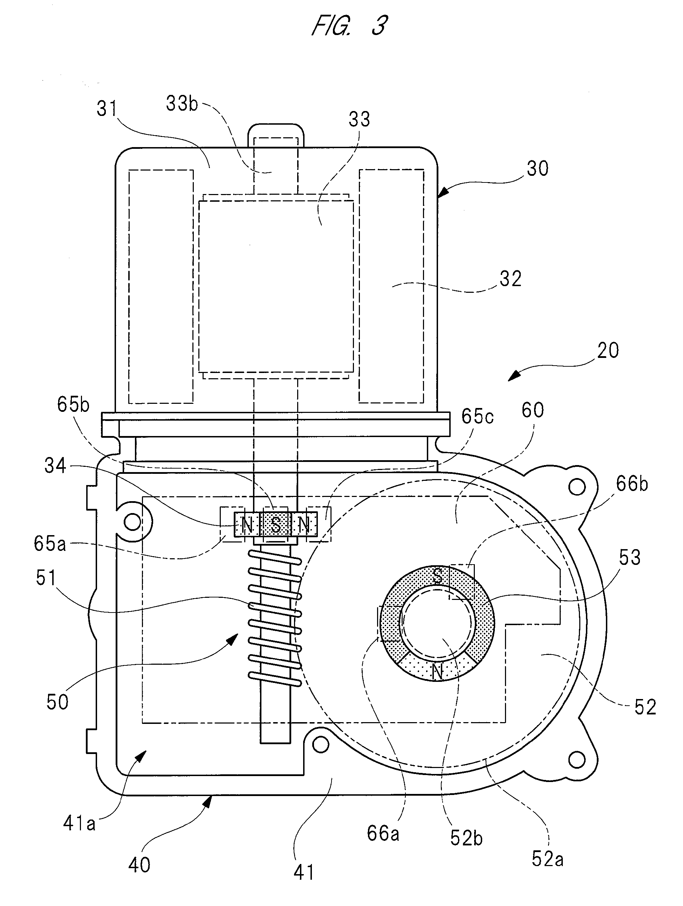

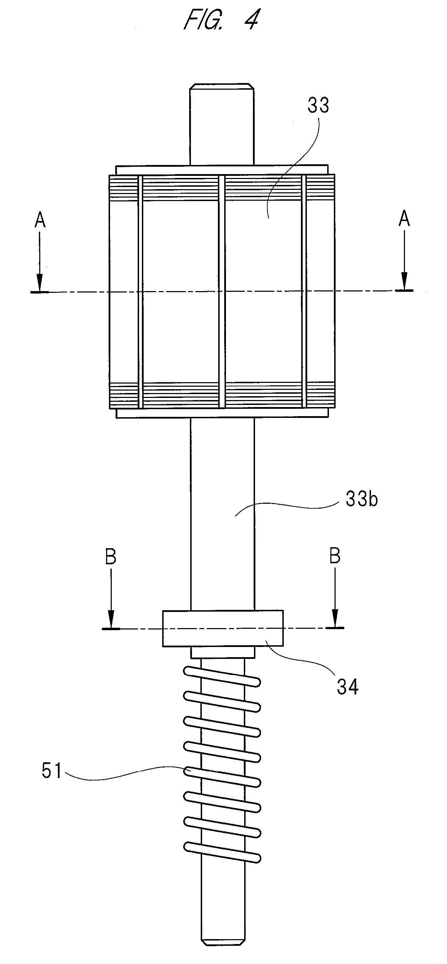

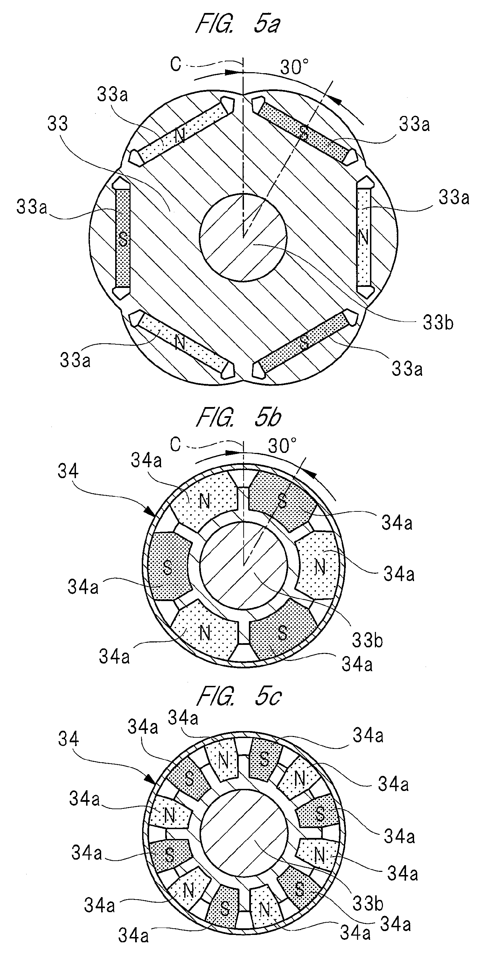

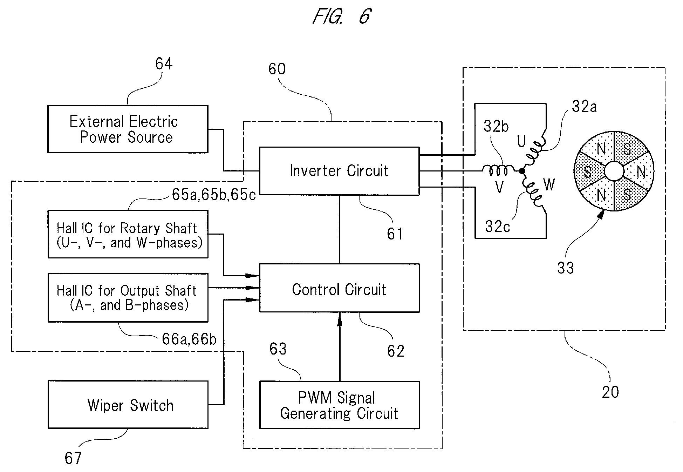

FIG. 1 is a view showing a wiper apparatus mounted on a vehicle and provided with a wiper motor according to the present invention, FIG. 2 is an outside view showing the wiper motor of FIG. 1, FIG. 3 is a bottom view showing a gear housing with a gear cover being detached from a gear housing, FIG. 4 is an explanatory view explaining detailed structures of a rotor and a rotating shaft, FIG. 5A is a cross-sectional view taken along a line A-A of FIG. 4, FIG. 5B is a cross-sectional view taken along a line B-B of FIG. 4, FIG. 5C is a cross-sectional view showing a modified example of a magnet for the rotating shaft, and FIG. 6 is a block diagram explaining an electric system of the wiper motor.

As shown in FIG. 1, a vehicle 10, such as an automotive vehicle or the like, is provided with a front glass 11 serving as a windshield, and a wiper apparatus 12 is mounted on the vehicle 10, and close to the front glass 11. Furthermore, the wiper apparatus 12 is operated by on-operating a wiper switch (not shown) in a vehicle room so as to wipe a front glass 11 to remove extraneous matters which is in contact with the front glass 11.

The wiper apparatus 12 has: a wiper motor (brushless wiper motor) 20; a power transmission mechanism 14 for transmitting swinging movements of the wiper motor 20 to each of pivot axes 13a and 13b; and a pair of wiper members 15a and 15b having: base end sides which are secured to the pivot axes 13a and 13b; and tip end sides which carry out reciprocal wiping operations on the front glass 11 by the swinging movements of the pivot axes 13a and 13b. The wiper members 15a and 15b are installed so as to correspond to the driver's side and the passenger's side, and the wiper members 15a and 15b are respectively composed of: wiper arms 16a and 16b; and wiper blades 17a and 17b which are attached to the wiper arms 16a and 16b.

Thus, by driving and rotating the wiper motor 20, the swinging movements of the wiper motor 20 are transmitted to the pivot axes 13a and 13b via the power transmission mechanism 14, thereby carrying out swinging movements of the pivot axes 13a and 13b. In this manner, the driving force of the wiper motor 20 is transmitted to the wiper members 15a and 15b so that the wiper blades 17a and 17b wipe the wiping ranges 11a and 11b of the front glass 11 to remove extraneous matters which is in contact with the wiping ranges 11a and 11b of the front glass 11.

As shown in FIGS. 2 and 3, the wiper motor 20 has: a motor unit 30; and a speed reduction mechanism unit 40. The motor unit 30 has a yoke 31 which is formed into a bottomed cylinder shape by carrying out a press machining process or the like on a steel plate, and a stator 32 formed into an annular shape is secured in the yoke 31. As shown in FIG. 6, on the stator 32, coils 32a, 32b and 32c of U-phase, V-phase and W-phase (three phases) are wound around in the winding form of star connection.

As shown in FIG. 3, a rotor 33 is rotatably installed in the stator 32 with a predetermined gap (air gap). As shown in FIG. 4, the rotor 33 is formed of a plurality of stacked steel plates into a substantially column shape. In the rotor 33, as indicated by a shaded portion in FIG. 5A, a plurality of plate-shaped permanent magnets 33a (six poles in this embodiment) are embedded in a manner so as to extend in their axial direction, and the permanent magnets 33a are installed with equal intervals (60° interval) so that their polarities are alternately arranged in the circumferential direction of the rotor 33. In this manner, the wiper motor 20 is composed of a brushless wiper motor having an IPM (Interior Permanent Magnet) structure in which the permanent magnets 33a are embedded inside the rotor 33. However, not limited to the brushless wiper motor of the IPM structure, the present invention may be applied to a brushless motor of an SPM (Surface Permanent Magnet) structure in which a plurality of permanent magnets are attached to the outer peripheral surface of the rotor. With respect to the SPM structure, a detailed explanation will be given in a fourth embodiment which will be described later.

A rotating shaft 33b is secured so as to extend through the rotation center of the rotor 33. The base end (upper side in FIG. 3) of the rotating shaft 33b is rotatably supported by a bearing (not shown) formed on the bottom portion of the yoke 31, and the tip (lower side in FIG. 3) of the rotating shaft 33b extends to the inside of a gear housing 41 forming the speed reduction mechanism unit 40. An extended portion of the rotating shaft 33b in the gear housing 41, that is, the tip portion and the substantially center portion of the rotating shaft 33b located inside the gear housing 41, are rotatably supported by bearings (not shown) installed in the gear housing 41.

A worm 51 forming a speed reduction mechanism 50 is integrally installed on the tip side of the rotating shaft 33b. Furthermore, the rotating shaft 33b has a portion positioned between the worm 51 of and the rotor 33 and close to the worm 51, an annular magnet 34 for the rotating shaft is integrally installed on this portion of the rotating shaft 33b. The magnet 34 for the rotating shaft is formed on the extended portion of the rotating shaft 33b in the gear housing 41, and provided with a plurality of permanent magnets 34a (see a shaded portion in the figure) whose N-poles and S-poles are alternately arranged along the circumferential direction of the rotating shaft 33b. The permanent magnets 34a, which have the number of poles of 6 in the same manner as that of the permanent magnets 33a inside the rotor 33, as shown in FIG. 5B, are installed along the circumferential direction of the magnet 34 for the rotating shaft with mutually equal intervals (60° interval). In this case, the magnet 34 for the rotating shaft forms a first magnet and a second magnet in the present invention. That is, in this embodiment, the first magnet and the second magnet are formed by a commonly-used magnet 34 for the rotating shaft.

In addition to utilization for detecting the rotation number of the rotating shaft 33b (function as the second magnet in the present invention), the magnet 34 for the rotating shaft is also used for detecting the rotation position of the rotor 33 relative to the stator 32 via the rotating shaft 33b (function as the first magnet in the present invention). Therefore, as shown in FIGS. 5A and 5B, in order to allow the rotation position of the rotating shaft 33b relative to the stator 32 and the rotation position of the rotor 33 relative to the stator 32 to have the same positional relationship toward the rotation direction, the polarities of the permanent magnets 33a (rotor 33 side) and the polarities of the permanent magnets 34a (rotating shaft-use magnet 34 side) are made to be matched toward the axial direction of the rotating shaft 33b. In other words, for example, the magnet 34 for the rotating shaft is secured to the rotating shaft 33b so as to allow the S-poles of the permanent magnets 33a and 34a to be located at positions each having 30° relative to a reference position C. By making the polarities matched with each other in this manner, upon detecting the rotation position of the rotor 33, it is possible to omit a correcting operation for correcting a phase offset of polarities, etc., and consequently to avoid complicated control operations of the wiper motor 20.

Additionally, the number of poles of the permanent magnets 34a of the magnet 34 for the rotating shaft may not be set to the same number of poles (6 poles) as the number of poles of the permanent magnets 33a of the rotor 33 as shown in FIG. 5B, the permanent magnets 34a may be set to 12 poles (double the number of poles of the permanent magnets 33a), for example, as shown in FIG. 5C. In short, it is only necessary to make appearing timings of the permanent magnets 33a and the permanent magnets 34a synchronized with each other so that the number of poles of the permanent magnets 34a may be set to an integer multiple (1 fold, 2 folds, 3 folds, 4 folds, etc.) of the number of poles of the permanent magnets 33a. By increasing the number of poles of the permanent magnets 34a to 2 folds or more of the number of poles of the permanent magnets 33a, an electric signal (pulse signal) from each of Hall ICs 65a to 65c for the rotating shaft (see FIG. 3) for use in detecting a change in polarities of the permanent magnets 34a can be finely divided. Thus, the detection precision of the rotation position of the rotor 33 relative to the stator 32 can be improved, and the control operations of the rotor 33 can be carried out more precisely.

As shown in FIGS. 2 and 3, the speed reduction mechanism unit 40 is provided with the gear housing 41 made of aluminum, and a gear cover 42 made of plastic material for shielding an opening 41a (front side in FIG. 3) of the gear housing 41. In the gear housing 41, the yoke 31 is secured with a fastening member (fixing screw or the like), not shown, and the motor unit 30 and the speed reduction mechanism unit 40 are thus integrally combined with each other and assembled so that the worm 51 formed in the rotating shaft 33b and the magnet 34 for the rotating shaft are disposed inside the gear housing 41.

Inside the gear housing 41, a worm wheel 52 (not shown in detail) is rotatably installed. The worm wheel 52 is formed into a disc shape by using resin material such as for example POM (polyacetal) plastic or the like, and gear teeth 52a (not shown in detail) are formed on its outer peripheral portion. The worm 51 is engaged with the gear teeth 52a of the worm wheel 52 so that the worm wheel 52 forms the speed reduction mechanism 50 together with the worm 51.

To the rotation center of the worm wheel 52, the base end of the output shaft 52b is secured, and the output shaft 52b is rotatably supported by a boss portion 41b of the gear housing 41 via a bearing (not shown). The tip end of the output shaft 52b extends to the outside of the gear housing 41, and to the tip portion of the output shaft 52b, the power transmission mechanism 14 is secured as shown in FIG. 1. Thus, the rotation number of the rotating shaft 33b is reduced via the worm 51 and the worm wheel 52 (speed reduction mechanism 50), and the output speed-reduced to have a high torque is released to the power transmission mechanism 14 via the output shaft 52b.

As shown in FIG. 3, on the rotation center of the worm wheel 52, a magnet 53 for the output shaft (third magnet) having an annular shape is installed, and the corresponding magnet 53 for the output shaft is integrally secured to the output shaft 52b so as to surround the periphery of the base end of the output shaft 52b. That is, the magnet 53 for the output shaft is integrally attached to an extended portion of the output shaft 52b in the inside of the gear housing 41. However, the magnet 53 for the output shaft may be directly secured to the output shaft 52b which extends through the worm wheel 52.

The magnet 53 for the output shaft has its range having substantially 270° along the circumferential direction magnetized to have the S-pole, with the other range having substantially 90° magnetized to have the N-pole. In this case, the magnet 53 for the output shaft forms the third magnet in the present invention, and the corresponding magnet 53 for the output shaft is used for detecting the rotation position of the output shaft 52b relative to the gear housing 41.

The opening 41a of the gear housing 41 is formed so as to house constituent members, such as the worm wheel 52 or the like, inside the gear housing 41, and the opening 41a is shielded by the gear cover 42, as shown in FIG. 2. A sealing member (not shown) is installed between the gear housing 41 and the gear cover 42, and with this configuration, it is possible to prevent rain water or the like from entering the inside of the speed reduction mechanism unit 40 via a gap between the gear housing 41 and the gear cover 42. A control board 60 is attached to the inside of the gear cover 42, as shown in FIGS. 2 and 3; thus, an external power source 64 and a wiper switch 67 (see FIG. 6) are electrically connected to the control board 60 via an external connector (not shown) of the vehicle 10 which is connected to a connector connection unit (not shown) formed on the gear cover 42.

The control board 60 is installed in the gear housing 41, and as shown in FIG. 6, an inverter circuit 61, a control circuit 62 and a PWM signal generating circuit 63 are assembled on the control board 60. To the inverter circuit 61, the external power source 64, such as an onboard battery or the like, to be mounted on the vehicle 10 is electrically connected, and coils 32a, 32b and 32c forming U-phase, V-phase and W-phase are electrically connected. The inverter circuit 61 is provided with a plurality of switching elements composed of semiconductor elements, such as FETs or the like, and these switching elements are constituted by three positive-electrode side switching elements (not shown) which are respectively connected to the positive electrodes of the external power source 64 and correspond to the U-phase, V-phase and W-phase, and three negative-electrode side switching elements (not shown) which are respectively connected to the negative electrodes of the external power source 64 and correspond to the U-phase, V-phase and W-phase.

The control circuit 62 is electrically connected to the inverter circuit 61 so as to perform ON/OFF control of the switching elements installed on the inverter circuit 61. In this case, the control circuit 62 is constituted by known microcomputers provided with CPUs, RAMs, ROMs or the like (not shown).

The PWM signal generating circuit 63 is designed to determine a duty ratio for intermittently ON/OFF controlling the switching elements of the inverter circuit 61, and to output a resulting duty ratio signal to the control circuit 62. Thus, the ratio at which the switching elements of the inverter circuit 61 are separately turned on is adjusted, and the size of a driving current to be supplied to each of the coils 32a, 32b and 32c is subsequently controlled.

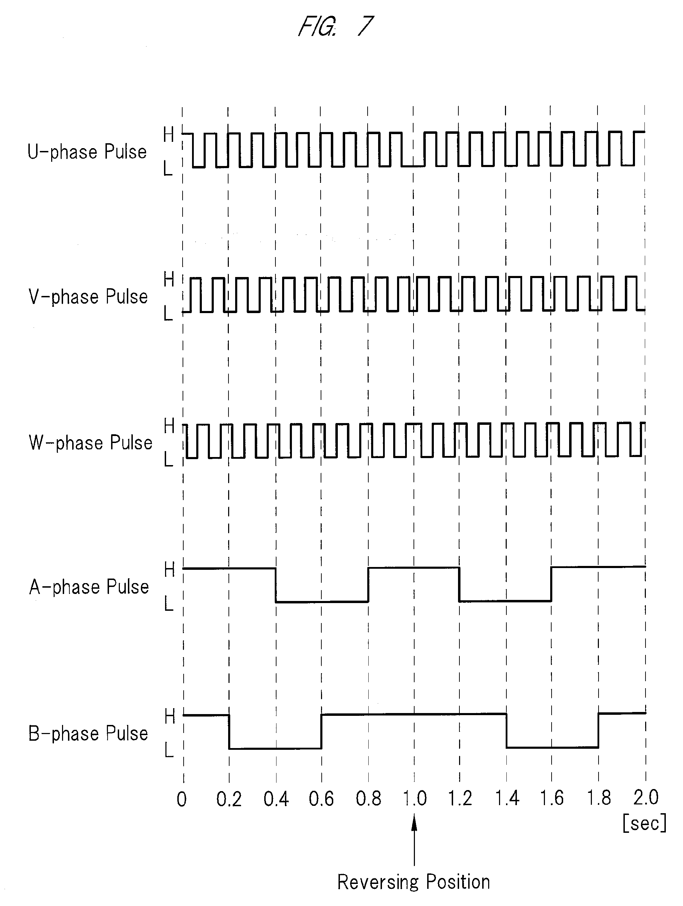

The control board 60 is further provided with three Hall ICs (U-phase, V-phase, W-phase) 65a, 65b and 65c for the rotating shaft and two Hall ICs (A-phase and B-phase) 66a and 66b for the output shaft. Each of the Hall ICs 65a to 65c, as well as 66a and 66b, has the same configuration as each other, and is designed to carry out switching operations depending on changes in polarities (change from the N-pole to the S-pole or change from the S-pole to the N-pole) so as to generate a pulse signal (rectangular waveform signal)(see FIG. 7). That is, the Hall ICs 65a to 65c, as well as 66a and 66b, are allowed to form non-contact type sensors to be used in combination with magnets.

As shown in FIG. 3, the Hall ICs 65a to 65c for the rotating shaft are installed on the control board 60 so as to face the magnets 34 for the rotating shaft. More specifically, the Hall ICs 65a to 65c for the rotating shaft are aligned with equal intervals and installed on the control board 60 so as to face the outer peripheral surface (side face) of the magnets 34 for the rotating shaft. Thus, the Hall ICs 65a to 65c for the rotating shaft are allowed to successively generate pulse signals (electric signals) with predetermined phase differences in response to the rotation of the magnets 34 for the rotating shaft (see FIG. 7).

In this case, the Hall ICs 65a to 65c for the rotating shaft form the first sensor and the second sensor in the present invention. In other words, in this embodiment, the first sensor and the second sensor are formed by using commonly-used Hall ICs 65a to 65c for the rotating shaft. Additionally, in order to detect the rotation position of the rotor 33 relative to the stator 32, all the U-phase, V-phase and W-phase corresponding to the outputs of the Hall ICs 65a to 65c for the rotating shaft are used (function as the first sensor of the present invention). On the other hand, in order to detect the rotation number of the rotating shaft 33b, at least two (U-phase and V-phase or U-phase and W-phase or V-phase and W-phase) of the U-phase, V-phase and W-phase corresponding to the outputs of the Hall ICs 65a to 65c for the rotating shaft are used (function as the second sensor of the present invention).

As shown in FIG. 3, the Hall ICs 66a and 66b for the output shaft are installed on the control board 60 so as to face the magnets 53 for the output shaft. More specifically, the Hall ICs 66a and 66b for the output shaft are installed on the control board 60 so as to face the upper surface (annular surface) of the magnet 53 for the output shaft, and so as to have predetermined intervals (substantially 90° interval) along the circumferential direction of the magnet 53 for the output shaft. Thus, the Hall ICs 66a and 66b for the output shaft are allowed to successively generate pulse signals (electric signals) with predetermined phase differences in response to the rotation of the magnet 53 for the output shaft (see FIG. 7). In this case, the Hall ICs 66a and 66b for the output shaft form the third sensor in the present invention.

As shown in FIG. 6, the wiper switch 67 installed in the vehicle room of the vehicle 10 is electrically connected to the control circuit 62 so that the operation signal of the wiper switch 67 is inputted to the control circuit 62. In this case, the operation signal for the wiper switch 67 differs depending on the operation state of the wiper switch 67 by the operator, a high-speed wiping operation signal (High), a low-speed wiping operation signal (Low), an intermittent wiping operation signal (Int) are listed as one example.

Next, an operation of the wiper motor 20 constructed as described above will be described in detail with reference to the drawings. FIG. 7 is pulse waveform diagrams showing an output state of an electric signal from each of Hall ICs.

"U-phase pulse" of FIG. 7 indicates an output waveform of the Hall IC 65a for the rotating shaft, "V-phase pulse" indicates an output waveform of the Hall IC 65b for the rotating shaft, and "W-phase pulse" indicates an output waveform of the Hall IC 65c for the rotating shaft. Furthermore, "A phase pulse" indicates an output waveform of the Hall IC 66a for the output shaft, and "B phase pulse" indicates an output waveform of the Hall IC 66b for the output shaft. Furthermore, reference numeral "H" of FIG. 7 represents a state in which the Hall IC is operated to be switched ON, and reference numeral "L" represents a state in which the Hall IC is operated to be switched OFF.

When the wiper switch 67 is operated by the operator so that the wiper motor 20 is driven to rotate (0 sec), a driving current is successively supplied to the coils 32a, 32b and 32c wound around the stator 32 from the external power source 64 via the inverter circuit 61. Thus, the rotor 33 is rotated at a predetermined rotation number so that the wiper blades 17a and 17b start to carry out wiping operations (see FIG. 1) from the lower reversing position (step position) toward the upper reversing position. In this case, the rotation number of the rotor 33, that is, the wiping speed of the wiper blades 17a and 17b, is determined by the operation signal ("High", "Low", or "Int") from the wiper switch 67.

When the wiper motor 20 is driven to rotate so that the rotor 33 is allowed to rotate relative to the stator 32, pulse signals having a predetermined phase difference and comparatively short intervals are successively outputted from the Hall ICs 65a to 65c for the rotating shaft in response to the rotation of the rotor 33 (0 sec and so on). Furthermore, the appearance timings and the number of occurrences of these pulse signals composed of U-phase, V-phase and W-phase are inputted to the control circuit 62 and are also stored therein. On the basis of the pulse signals (three), the control circuit 62 ON/OFF controls the switching elements installed in the inverter circuit 61, while detecting the rotation positions relative to the stator 32 of the rotor 33, so that the wiper motor 20 is driven to rotate. Furthermore, the control circuit 62 detects the rotation number of the rotating shaft 33b on the basis of two pulse signals so that the wiper motor 20 is driven to rotate so as to have the rotation number in accordance with the operation signal from the wiper switch 67.

When the wiper motor 20 is driven to rotate and the worm wheel 52 and the output shaft 52b are consequently rotated, pulse signals having a predetermined phase difference and comparatively long intervals are successively outputted from the Hall ICs 66a and 66b for the output shaft in response to the rotation of the worm wheel 52 (output shaft 52b) (0 sec and so on). Furthermore, the appearing timings and the number of occurrences of these pulse signals composed of A-phase and B-phase are respectively inputted to the control circuit 62 and are also stored therein. On the basis of the pulse signals, the control circuit 62 detects the rotation positions of the output shaft 52b relative to the gear housing 41, so that the positions of the wiper blades 17a and 17b relative to the front glass 11 are thus detected. Furthermore, the control circuit 62 ON/OFF controls the switching elements installed in the inverter circuit 61 so as to drive the wiper motor 20 to rotate so that the wiper blades 17a and 17b are allowed to stop at predetermined positions and to carry out reversing operations on the front glass 11.

In this case, as shown in FIG. 7, each of the wiper blades 17a and 17b is designed to make one reciprocal movement on the front glass 11 between 0 sec and 2.0 sec. That is, from 0 sec to 1.0 sec, each of the wiper blades 17a and 17b is moved toward the upper reversing position, and at the time point of 1.0 sec, the wiper motor 20 is reversely operated from a forward driving process to a backward driving process so that each of the wiper blades 17a and 17b is thereafter moved toward the lower reversing position between 1.0 sec and 2.0 sec. Therefore, as shown by an arrow indicating the reversing position, the pulse signals are placed on the right and left sides of the drawing symmetrically in a mirror image, with the corresponding time point (point of 1.0 sec) serving as a border.

As described above in detail, according to the wiper motor 20 of the first embodiment, the magnet 34 for the rotating shaft (first magnet, second magnet) is installed on the extended portion of the rotating shaft 33b in the gear housing 41, and the Hall ICs 65a to 65c for the rotating shaft (first sensor, second senor) are formed on the control board 60 inside the gear housing 41 so as to face the magnet 34 for the rotating shaft. The Hall ICs 65a to 65c for the rotating shaft are adapted to detect the rotation position of the rotating shaft 33b relative to the stator 32, that is, the rotation position of the rotor 33 relative to the stator 32, and the Hall ICs 65a to 65c for the rotating shaft are adapted to detect the rotation number of the rotating shaft 33b.

With this arrangement, the Hall ICs 65a to 65c for the rotating shaft (compatibly used) for detecting the rotation position of the rotor 33 and the rotation number of the rotating shaft 33b and the Hall ICs 66a and 66b for the output shaft for detecting the rotation position of the output shaft 52b relative to the gear housing 41 can be concentrated and formed on the control board 60. Therefore, since it is unnecessary to install a sensor (first sensor in the present invention) for detecting the rotation position of the rotor 33 at a portion of the wiper motor 20 close to the rotor 33, the dimension of the wiper motor 20 along the axial direction of the rotating shaft 33b can be shortened, and further downsized.

Furthermore, according to the wiper motor 20 of the first embodiment, since the magnet and the sensor (first magnet/first sensor) for detecting the rotation position of the rotor 33 and the magnet and the sensor (second magnet/second sensor) for detecting the rotation number of the rotating shaft 33b are formed in a manner so as to be commonly shared by the Hall ICs 65a to 65c for the rotating shaft and the magnet 34 for the rotating shaft, the number of the magnets and the number of the sensors can be reduced so that the low cost and light-weight of the wiper motor 20 can be realized.

Furthermore, according to the wiper motor 20 of the first embodiment, since the permanent magnets 33a of the rotor 33 and the permanent magnets 34a of the magnet 34 for the rotating shaft are magnetized so as to allow its polarities to be alternately aligned toward the circumferential direction of the rotating shaft 33b, with the polarities of the permanent magnets 33a and the polarities of the permanent magnets 34a being matched toward the axial direction of the rotating shaft 33b, the detection of the rotation position of the rotor 33 relative to the stator 32 and the control of the rotor 33 on the basis of this detection can be simplified.

Next, the second embodiment of the present invention will be described with reference to the accompanying drawings. In addition, elements the same in function as those of the above-explained first embodiment are denoted by the same reference numbers as those of the first embodiment, the detail description of those elements are omitted here.

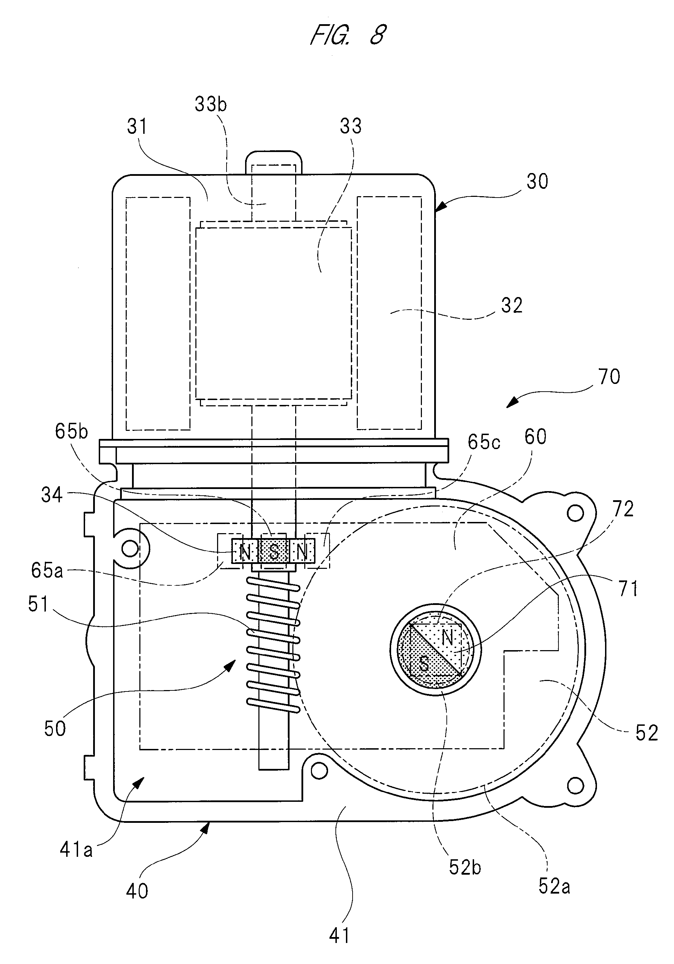

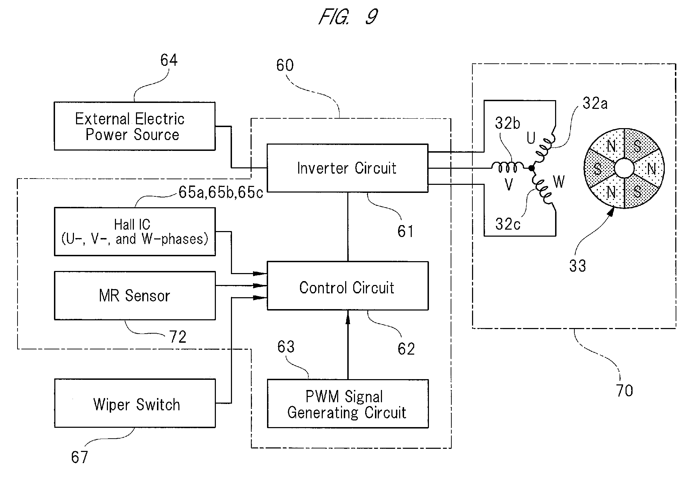

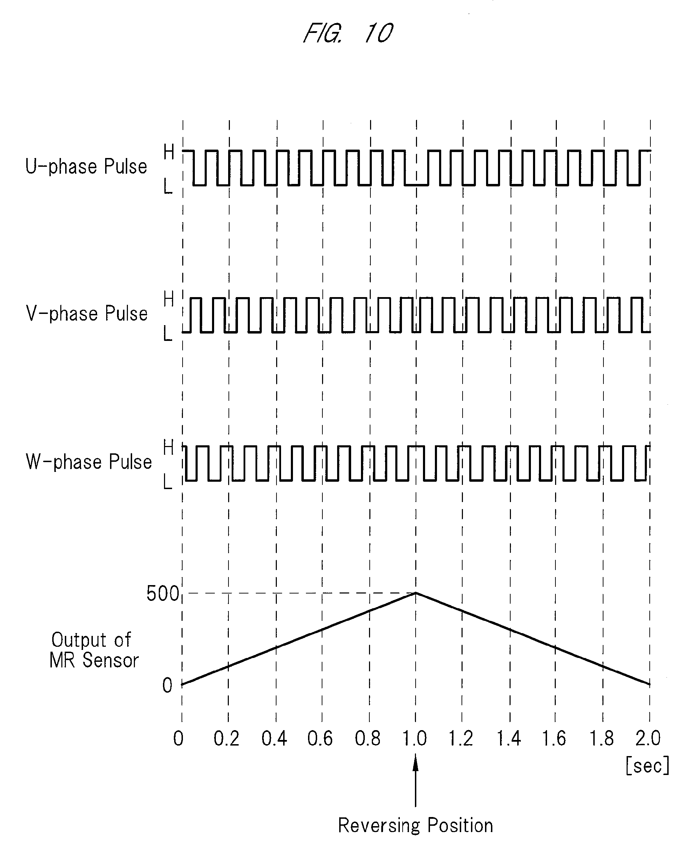

FIG. 8 is a bottom view corresponding to FIG. 3 of the wiper motor according to a second embodiment, FIG. 9 is a block diagram explaining an electric system of the wiper motor of FIG. 8, and FIG. 10 shows pulse waveform diagrams showing an output state of an electric signal from each of Hall ICs and MR sensors.

The wiper motor according to the second embodiment differs from the wiper motor according to the first embodiment in that the shape of the third magnet and the function of the third sensor differ from those of the first embodiment.

As shown in FIG. 8, a magnet 71 for the output shaft (third magnet) having a tablet shape is attached to the extended portion of the output shaft 52b in the gear housing 41 via the worm wheel 52, and the magnet 71 for the output shaft is rotated integrally with the output shaft 52b. The magnet 71 for the output shaft has its range with substantially 180° being magnetized to the S-pole, with the other range having substantially 180° being magnetized to the N-pole.

An MR sensor (third sensor) 72 made of a magnetic resistance element is attached to a portion of the control board 60 facing the magnet 71 for the output shaft. As shown in FIG. 9, the MR sensor 72 is electrically connected to the control circuit 62 so that an output voltage corresponding to an electric signal from the MR sensor 72 is inputted to the control circuit 62. The MR sensor 72 has its resistance value changed in response to a change in the magnetic flux due to the rotation of the magnet 71 for the output shaft facing the corresponding MR sensor 72; thus, as shown in FIG. 10, the output voltage (0 to 500 mV) is adapted to change substantially linearly. More specifically, the MR sensor 72 is set so as to have its output voltage maximized at the point of time of 1.0 sec corresponding to the reversing position of each of the wiper blades 17a and 17b. Thus, the rotation position (absolute position) of the output shaft 52b relative to the gear housing 41 can be detected.
In the wiper motor 70 according to the second embodiment constructed as described above, the same functions and effects as those of the first embodiment can be obtained. In addition to this, in the second embodiment, the magnet 71 for the output shaft is formed into a tablet shape so as to achieve further small size and light-weight in comparison with the magnet 53 for the output shaft of the first embodiment. Furthermore, since the third sensor can be configured by using the single MR sensor 72, a packaging process of electronic parts including the MR sensor 72 on the control board 60 can be simplified. Furthermore, since the MR sensor 72 detects the absolute position of the output shaft 52b relative to the gear housing 41, it is possible to omit computing processes for use in detecting positions in the control circuit 62.

Next, the third embodiment of the present invention will be described with reference to the accompanying drawings. In addition, elements the same in function as those of the above-explained first embodiment are denoted by the same reference numbers as those of the first embodiment, the detail description of those elements are omitted here.

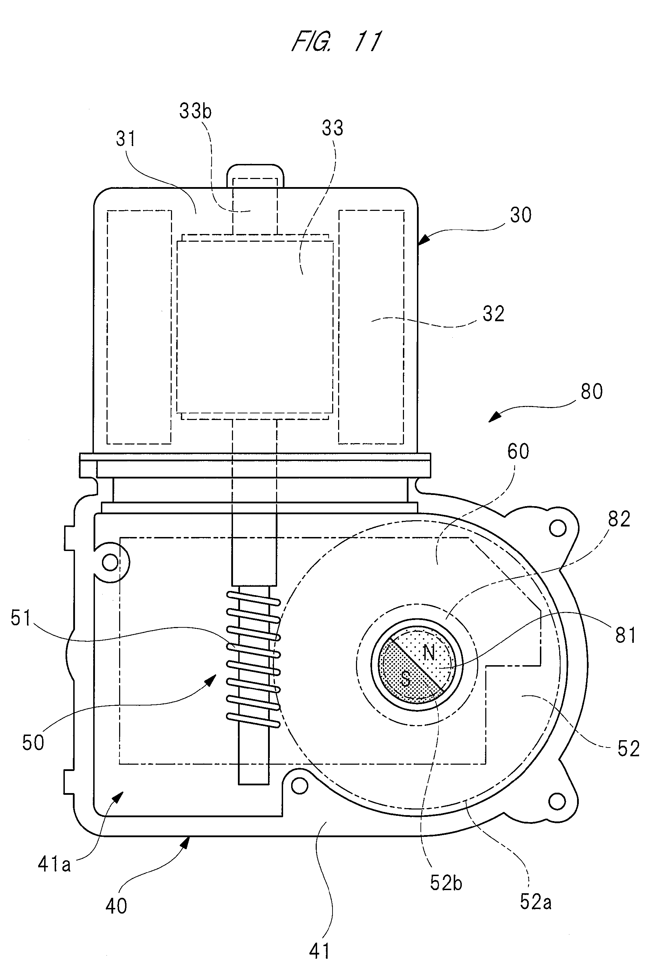

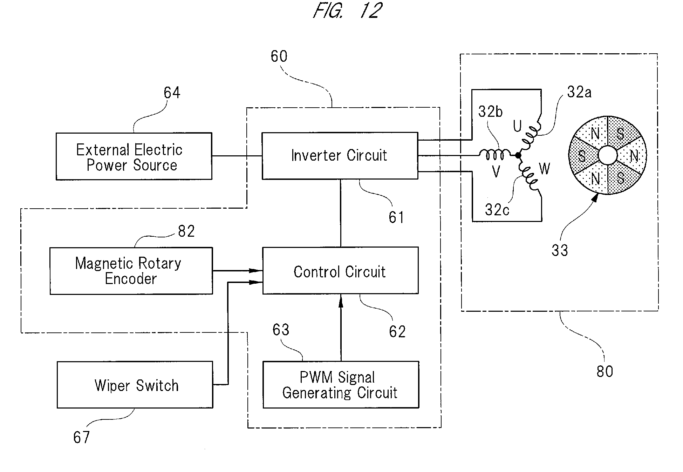

FIG. 11 is a bottom view corresponding to FIG. 3 of a wiper motor according to a third embodiment, and FIG. 12 is a block diagram explaining an electric system of the wiper motor of FIG. 11.

The wiper motor according to the third embodiment differs from the wiper motor 20 according to the first embodiment in that the first magnet, the second magnet, and the third magnets are formed of a commonly-used magnet, and the first sensor, the second sensor, and the third sensor are formed of a commonly-used sensor.

As shown in FIG. 11, a magnet 81 for the output shaft (first magnet, second magnet and third magnet) having a tablet shape is attached to the extended portion of the output shaft 52b in the gear housing 41 via the worm wheel 52, the magnet 81 for the output shaft is rotated integrally with the output shaft 52b. The magnet 81 for the output shaft has its range with substantially 180° along the circumferential direction being magnetized to the S-pole, with the other range having substantially 180° being magnetized to the N-pole.

A magnet-type rotary encoder 82 (first sensor, second sensor, third sensor) capable of outputting pulse signals (three types) corresponding to U-phase, V-phase and W-phase which are spuriously obtained in response to the rotation of the output shaft 52b and an electric signal the same as that of the MR sensor 72 (see FIG. 8) in accordance with the second embodiment is installed on a portion of the control board 60 facing the magnet 81 for the output shaft. As shown in FIG. 12, the rotary encoder 82 is electrically connected to the control circuit 62, and a pulse signal and an output voltage corresponding to the electric signals from the rotary encoder 82 are inputted to the control circuit 62.

In this case, the electric signal from the rotary encoder 82 is an electric signal the same as that of FIG. 10. Furthermore, although the rotation state (the rotation number and the rotation position) of the rotating shaft 33b is not directly detected in the wiper motor 80 according to the third embodiment in the same manner as those of the first embodiment and the second embodiment, on the basis of the pulse signals (three types) corresponding to U-phase, V-phase and W-phase spuriously obtained by the rotation of the worm wheel 52, the rotation state of the rotating shaft 33b is estimated by the control circuit 62.

In the wiper motor 80 according to the third embodiment constructed as described above, the same functions and effects as those of the first embodiment can be obtained. In addition to this, in the third embodiment, since only the single magnet 81 for the output shaft and the single rotary encoder 82 are installed, it is possible to achieve further small size and light-weight of the wiper motor 80. Furthermore, the control logic of the wiper motor 80 can be further simplified.

Next, the fourth embodiment of the present invention will be described with reference to the accompanying drawings. In addition, elements the same in function as those of the above-explained first embodiment are denoted by the same reference numbers as those of the first embodiment, the detail description of those elements are omitted here.

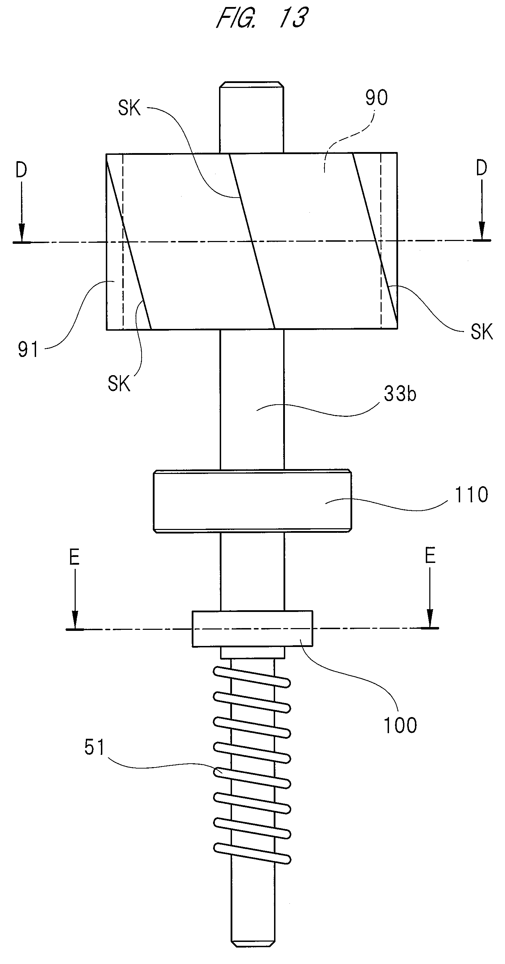

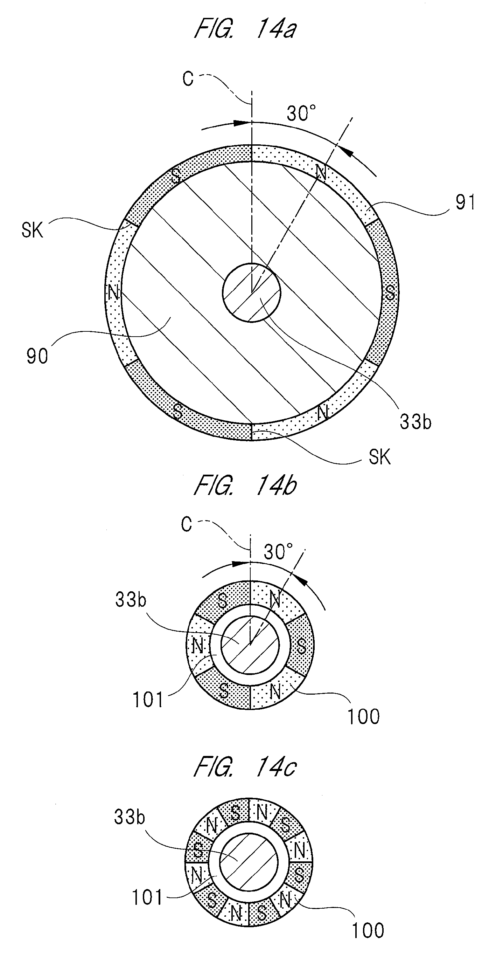

FIG. 13 is a view corresponding to FIG. 4 of a wiper motor according to a fourth embodiment, FIG. 14A is a cross-sectional view taken along a line D-D of FIG. 13, FIG. 14B is a cross-sectional view taken along a line E-E of FIG. 13, and FIG. 14C is a cross- sectional view showing a modified example of a magnet for the rotating shaft.

As shown in FIGS. 13-14C, the fourth embodiment differs from the third embodiment in that a rotor 90 and a magnet 100 for the rotating shaft differ in structure from those of the third embodiment, and a radial bearing 110 is fixed between the rotor 90 of the rotating shaft 33b and the magnet 100 for the rotating shaft.

A rotor 90 is formed into a substantially column shape by carrying out cutting work or the like on a round rod, and is pressed and fixed in the rotating shaft 33b so as to integrally rotate. A cylindrical permanent magnet (ring magnet) 91 is attached to the outer peripheral surface of the rotor 90. That is, in the fourth embodiment, an SPM (Surface Permanent Magnet) structure is used in the rotor 90. In this case, since the permanent magnet 91 is formed into a ring magnet and allowed to cover all the circumference of the rotor 90, more poles can be installed in comparison with the first embodiment. Therefore, the fourth embodiment makes it possible to improve the degree of freedom in designing, that is, to suitably correspond to the variation of motor specifications.

Additionally, the rotor 90 is formed into the substantially column shaped by cutting work of a round rod and shown in the above description; however, in the same manner as that of the first embodiment, the rotor may be formed of a plurality of stacked steel plates into a substantially column shape.

A permanent magnet 91 is formed of a plurality of magnetic poles which is alternately magnetized along the circumferential direction (6 poles in this embodiment), and the rotor 90 and the permanent magnet 91 are firmly fixed to each other with an adhesive or the like. Furthermore, as shown in FIG. 13, a skew SK which is tilted toward the axial direction of the rotor 90 is formed in the permanent magnet 91 so that by this arrangement, the occurrence of a failure such as a cogging torque, a torque ripple or the like can be suppressed. In this case, as the permanent magnet 91, a permanent magnet of a so-called segment type (divided type), which is divided into a plurality of portions in the circumferential direction, may be used. In this case, in order to prevent dropping off (separation) from the rotor 90, as shown in FIGS. 5B and 5C, it is preferable to cover the circumference of each permanent magnet with a cylindrical cover.

In the same manner as that of the permanent magnet 91 fixed to the rotor 90, a magnet 100 for the rotating shaft is formed of a permanent magnet (ring magnet) having a cylindrical shape. The magnet 100 for the rotating shaft is formed of a plurality of magnetic poles which is alternately magnetized along the circumferential direction, and it has six magnetic poles in the same manner as that of the permanent magnet 91. However, no skew SK as that of the permanent magnet 91 is formed in the magnet 100 for the rotating shaft. In this case, since the magnet 100 for the rotating shaft is formed as a ring magnet, many poles can be formed in the same manner as that of the permanent magnet 91 so that more precise detailed control operations can be carried out.

An attaching cylinder 101 for use in attaching the magnet 100 to the rotating shaft 33b is installed between an inner peripheral portion of the magnet 100 and an outer peripheral portion of the rotating shaft 33b. The attaching cylinder 101 is formed by, for example, a pipe member (not shown in detail) made of brass, and is swaged and fixed to a fixing concave portion (not shown) formed on the periphery of the rotating shaft 33b with the magnet 100 attached to the rotating shaft.

In this case, the magnet 100 for the rotating shaft constitutes the first magnet and the second magnet of the present invention. In the same manner as that of the permanent magnet 91, a so-called "segment type (divided type) permanent magnet", which is divided into a plurality of portions in the circumferential direction, may be used as the magnet 100 for the rotating shaft. In this case, in order to prevent the magnet from dropping off (or being separated) from the attaching cylinder 101, as shown in FIGS. 5B and 5C, it is preferable to cover the circumference of each permanent magnet with a cylindrical cover. Furthermore, the magnet 100 for the rotating shaft may have twelve poles (two times the pole number of the permanent magnet 91) as shown in FIG. 14C.

A ball bearing composed of an inner race, an outer race and a plurality of steel balls is used as a radial bearing 110 shown in FIG. 13. Furthermore, although it is not shown in drawings in detail, the radial bearing 110 is fixed between the rotor 90 and the magnet 100 for the rotating shaft by press fitting of the rotating shaft 33b into the inner race of the radial bearing 110. On the other hand, the outer race of the radial bearing 110 is fixed to a predetermined portion of the gear housing 41 (see FIGS. 2 and 3) by a stopper member (not shown). In this manner, the radial bearing 110 rotatably supports the rotating shaft 33b, and prevents the rotating shaft 33b from moving toward the axial direction. Therefore, it is unnecessary to install thrust bearings or the like on the both sides in the axial direction of the rotating shaft 33b, thereby making it possible to reduce the number of parts and consequently to greatly reduce the sliding loss of the rotating shaft 33b.

In the fourth embodiment described above, the same functions and effects as those of the first embodiment can be obtained.

The present invention is not intended to be limited by the above-mentioned embodiments, and it is needless to say that various modifications may be made therein within a scope not departing from the gist of the present invention. For example, in a manner different from the above-mentioned embodiments, the first magnet, the second magnet and the third magnet of the present invention may be prepared as different members without being prepared as commonly shared members. In a manner different from the above-mentioned embodiments, the first sensor, the second sensor and the third sensor of the present invention may also be prepared as different members without being prepared as commonly shared members. Furthermore, not limited to the front glass 11, the wiper apparatus 12 may be used for wiping rear glass (not shown). Furthermore, the wiper apparatus 12 has a structure in which as shown in FIG. 1, wiper arms 16a and 16b are coupled to the output shaft 52b via the power transmitting mechanism 14; however, it may have a structure in which the wiper arms are directly coupled to the output shaft. Although the wiper apparatus 12 shown in FIG. 1 has a structure in which the two wiper arms 16a and 16b are driven by the single wiper motor 20, it may have a structure in which the two wiper arms are driven by respectively individual wiper motors. Furthermore, the number of coils to be wound around the stator 32 and the number of permanent magnets to be installed in the rotors 33 and 90 may be altered on demand. Furthermore, not limited to a brushless wiper motor of an inner rotor type in which the rotors 33 and 90 are rotatably installed in the stator 32, the present invention may be applied to a brushless wiper motor of an outer rotor type in which the rotor is placed outside the stator. Although a configuration is shown in which the radial bearing 110 is attached to the rotating shaft 33b to which the rotor 90 is fixed, which relates to the fourth embodiment, the radial bearing 110 may be attached to the rotating shaft 33b (see FIG. 4) to which the rotor 33 is fixed, which relates to the first embodiment.

### INDUSTRIAL APPLICABILITY

The brushless wiper motor is used for driving a wiper member forming a wiper apparatus installed in a vehicle, such as an automotive vehicle, so as to wipe a windshield.

## Claims

1. A brushless wiper motor for driving a wiper member which wipes a windshield to remove extraneous matters which is in contact with the windshield, the brushless wiper motor comprising:
a stator around which coils are wound;
a rotor provided with a permanent magnet and a rotating shaft;
an output shaft for externally outputting a rotation of the rotating shaft;
a gear housing for rotatably supporting the output shaft;
a control board installed in the gear housing;
a first magnet integrally formed on an extended portion of the rotating shaft in the gear housing, and used for detecting a rotation position of the rotating shaft relative to the stator;
a first sensor installed on the control board so as to face the first magnet, and adapted to generate an electric signal in response to the relative rotation of the first magnet;
a second magnet integrally formed on the extended portion of the rotating shaft in the gear housing, and used for detecting a rotation number of the rotating shaft;
a second sensor installed on the control board so as to face the second magnet, and adapted to generate an electric signal in response to the relative rotation of the second magnet;
a third magnet integrally formed on the extended portion of the rotating shaft in the gear housing and used for detecting the rotation position of the output shaft relative to the gear housing; and
a third sensor installed on the control board so as to face the third magnet, and adapted to generate an electric signal in response to the relative rotation of the third magnet.

2. The brushless wiper motor according to claim 1, wherein the first magnet and the second magnet are formed of a common magnet and the first sensor and the second sensor are formed of a common sensor.

3. The brushless wiper motor according to claim 1, wherein the permanent magnet, first and second magnets are magnetized such that polarities are alternately aligned toward a circumferential direction of the rotating shaft, with the polarity of the permanent magnet and the polarities of the first and second magnets being matched in an axial direction of the rotating shaft.

4. The brushless wiper motor according to claim 3, wherein the number of poles of the first and second magnets is equal to an integral multiple of the number of poles of the permanent magnet.

5. A brushless wiper motor for driving a wiper member for wiping a windshield to remove extraneous matters which is in contact with the windshield, the brushless wiper motor comprising:
a stator around which coils are wound;
a rotor provided with a permanent magnet and a rotating shaft;
an output shaft for externally outputting a rotation of the rotating shaft;
a gear housing for rotatably supporting the output shaft;
a control board installed in the gear housing;
a first magnet integrally formed on an extended portion of the output shaft in the gear housing and used for detecting a rotation position of the rotating shaft relative to the stator;
a first sensor which is installed on the control board so as to face the first magnet and adapted to generate an electric signal in response to the relative rotation of the first magnet;
a second magnet which is integrally formed on the extended portion of the output shaft in the gear housing and used for detecting a rotation number of the rotating shaft;
a second sensor which is installed on the control board so as to face the second magnet and adapted to generate an electric signal in response to the relative rotation of the second magnet;
a third magnet which is integrally formed on an extended portion of the rotating shaft in the gear housing and used for detecting the rotation position of the output shaft relative to the gear housing; and
a third sensor which is installed on the control board so as to face the third magnet and adapted to generate an electric signal in response to the relative rotation of the third magnet.
